# EUROPÄISCHE PATENTSCHRIFT

(11) **EP 3 833 518 B1**
(45) Veröffentlichungstag und Bekanntmachung des Hinweises auf die Patenterteilung: **20.11.2024**
(21) Anmeldenummer: 19748813.3
(22) Anmeldetag: 31.07.2019
(51) Int. Cl.: B25J 18/00, B25J 19/00

(54) **ROBOTERARM MIT ÜBER WENIGSTENS EINEN REISSVERSCHLUSS VERBUNDENEN GEHÄUSESCHALEN**
ROBOTIC ARM COMPRISING HOUSING SHELLS CONNECTED VIA AT LEAST A ZIPPER
BRAS DE ROBOT MUNI DE COQUES DE BOÎTIER RELIÉES PAR AU MOINS UNE FERMETURE ÉCLAIR

(30) Priorität: 10.08.2018 DE 102018213499
(43) Veröffentlichungstag der Anmeldung: 16.06.2021
(73) Patentinhaber: KUKA Deutschland GmbH, 86165 Augsburg (DE)
(72) Erfinder: RIEDEL, Martin, 86165 Augsburg (DE); REEKERS, Andre, 86163 Augsburg (DE)
(74) Vertreter: Oelke, Jochen
(86) Internationale Anmeldenummer: PCT/EP2019/070641
(87) Internationale Veröffentlichungsnummer: WO 2020/030496

(56) Entgegenhaltungen:
- CN-A- 106 799 746
- DE-A1- 102015 012 960
- DE-U1- 202007 006 121
- IL-A- 67 505
- US-A1- 2006 261 207

## Beschreibung

Die Erfindung betrifft einen Roboterarm, aufweisend mehrere Gelenke und mehrere Glieder, die jeweils zwei benachbarte Gelenke in einer festen Anordnung zueinander miteinander verbinden, wobei mindestens eines der Glieder wenigstens eine erste Gehäuseschale und wenigstens eine zweite Gehäuseschale aufweist, und die erste Gehäuseschale mit der zweiten Gehäuseschale zur Bildung eines hohlen Gliedes durch Verbindungsmittel formschlüssig verbunden ist.

Aus der WO 2017/029263 A1 ist ein Robotersystem mit zumindest einem Roboterarm bekannt, bestehend aus mehreren Gliedern, die über Gelenke miteinander verbunden sind und die ein Gehäuse zur Aufnahme von mechanischen, mechatronischen und/oder elektronischen Komponenten aufweisen, wobei das Gehäuse ausgebildet ist, die in das Glied eingeleiteten Drehmomente und Kräfte auf ein daran anschließendes Glied zu übertragen, wobei das Gehäuse aus zumindest zwei formkomplementären Gehäuseteilen zusammengesetzt ist, die miteinander in einer drehmoment- und kraftübertragenden Verbindung stehen. Als Material für die schalenartigen Gehäuseteile können dabei Gussteile aus Metall, wie bspw. Aluminium, Kunststoffe oder Carbon vorgesehen sein.

Aufgabe der Erfindung ist es, einen Roboterarm mit Glieder zu schaffen, von denen zumindest eines wenigstens eine erste Gehäuseschale und wenigstens eine zweite Gehäuseschale aufweist, wobei die Gehäuseschalen einerseits besonderes stabil verbunden sein sollen und andererseits auf einfache Weise zusammengefügt werden können und/oder bei Bedarf getrennt werden können.

Diese Aufgabe wird erfindungsgemäß gelöst durch einen Roboterarm, aufweisend mehrere Gelenke und mehrere Glieder, die jeweils zwei benachbarte Gelenke in einer festen Anordnung zueinander miteinander verbinden, wobei mindestens eines der Glieder wenigstens eine erste Gehäuseschale und wenigstens eine zweite Gehäuseschale aufweist, und die erste Gehäuseschale mit der zweiten Gehäuseschale zur Bildung eines hohlen Gliedes durch Verbindungsmittel formschlüssig verbunden ist, wobei die Verbindungsmittel wenigstens einen Reißverschluss aufweisen.

Roboterarme, insbesondere Industrieroboter sind Arbeitsmaschinen, die zur automatischen Handhabung und/oder Bearbeitung von Objekten mit Werkzeugen ausgerüstet werden können, wobei deren Glieder mittels ihrer Gelenke in mehreren Bewegungsachsen beispielsweise hinsichtlich Orientierung, Position und Arbeitsablauf programmierbar sind.

Ein Industrieroboter weist im Allgemeinen den Roboterarm und eine programmierbare Steuerung (Steuervorrichtung) auf, die während des Betriebs die Bewegungsabläufe des Industrieroboters steuert bzw. regelt, dadurch, dass ein oder mehrere automatisch oder manuell verstellbare Gelenke (Roboterachsen) durch insbesondere elektrische Motoren oder Antriebe bewegt werden, in dem die Steuerung die Motoren oder Antriebe steuert bzw. regelt.

Roboterarme können unter anderem ein Gestell und ein relativ zum Gestell mittels eines Gelenks drehbar gelagertes Karussell umfassen, an dem eine Schwinge mittels eines anderen Gelenks schwenkbar gelagert ist. An der Schwinge kann dabei ihrerseits ein Armausleger mittels eines weiteren Gelenks schwenkbar gelagert sein. Der Armausleger trägt dabei eine Roboterhand, wobei insoweit der Armausleger und/oder die Roboterhand mehrere weitere Gelenke aufweisen können.

Der mehrere über Gelenke verbundene Glieder aufweisende Roboterarm kann als ein Knickarmroboter mit mehreren seriell nacheinander angeordneten Gliedern und Gelenken konfiguriert sein, insbesondere kann der Roboterarm als ein Sechsachs-Knickarmroboter oder ein Siebenachs-Knickarmroboter ausgebildet sein. In einer weiteren Ausführungsart kann der Roboterarm aber auch ein horizontaler Gelenkarmroboter, d.h. ein SCARA-Roboter sein.

Jedem Gelenk, das beispielsweise zwei benachbarte Glieder gegeneinander verstellbar verbindet, können jeweils ein Motor oder Antrieb und/oder ein Getriebe zugeordnet sein. Jedes Getriebe dient dazu, eine von dem Motor oder Antrieb eingebrachte Drehzahl bzw. Drehmoment zu übersetzen bzw. zu untersetzen und eine Verstellung des jeweils einen Gliedes bezüglich des benachbarten Gliedes zu ermöglichen.

Die vom Roboterarm zu tragende und im Raum zu bewegende Last kann schon durch ein an einem Handflansch des Roboterarms befestigten Werkzeug, wie beispielsweise eines Greifers gebildet werden. Alternativ oder ergänzend zu einem Werkzeug oder Greifer kann die Last jedoch auch durch ein zu handhabendes oder zu bearbeitendes Werkstück gebildet werden. Um solche Lasten halten und bewegen zu können, müssen Kräfte und Momente durch die tragende Struktur des Roboterarms hindurch übertragen werden. Insbesondere zur Bildung eines tragfähigen Armauslegers können deshalb ein oder mehrere Glieder des Roboterarms als Gehäusekörper mit Hohlräumen ausgeführt sein, bei denen der Gehäusekörper sämtliche Kräfte und Momente der Last aufnimmt, wobei in den Hohlräumen der Gehäusekörper Motoren, Antriebe, Getriebe und/oder Versorgungsleitungen angeordnet sein können. Die hohlen Gehäusekörper werden aus wenigstens zwei Gehäuseschalen - der wenigstens einen ersten Gehäuseschale und der wenigstens einen zweiten Gehäuseschale zusammengesetzt. Dabei müssen die wenigstens eine erste Gehäuseschale und die wenigstens eine zweite Gehäuseschale durch Verbindungsmittel miteinander verbunden werden, um den kompletten Gehäusekörper bilden zu können. Erfindungsgemäß weisen die Verbindungsmittel wenigstens einen Reißverschluss auf.

Als Glieder und Gehäuseschalen werden im Rahmen der Erfindung Strukturelemente verstanden, die zwei benachbarte Gelenke mechanisch so miteinander verbinden, dass Lasten in allen sechs Freiheitsgraden, d.h. translatorisch in den drei kartesischen Raumrichtungen und rotatorisch um drei Drehachsen, die jeweils in den drei kartesischen Raumrichtungen ausgerichtet sind, übertragen werden können. Als Werkstoffe werden im Allgemeinen überwiegend Metalle, wie beispielsweise Stahl oder Aluminium verwendet und zwar insbesondere in Schweiß-, Guss- oder Fräskonstruktionen. Ausnahmen bilden eher Ausführungen beispielsweise aus Kohlefaser oder Kunststoff. Kunststoff wird bisher allenfalls für Verkleidungen und Abdeckungen verwendet, um eine darunterliegende tragende Metallstruktur vollständig oder teilweise zu verdecken. Eine Übertragung der Lasten in allen sechs Freiheitsgraden erfolgt bisher jedoch nicht über die Verkleidungen und Abdeckungen, insbesondere dann nicht, wenn sie aus Kunstsoff bestehen.

Allerdings wurde mit der Erfindung herausgefunden, dass eine Kunststoffstruktur der Glieder durchaus sehr viele Vorteile in der Gestaltung bietet und sich insbesondere im Hinblick auf sehr kostengünstige Roboter besonders eignet. Kritisch ist hier jedoch die eher begrenzte Steifigkeit und Belastbarkeit des Kunststoffmaterials, was ein besonders belastungsoptimales Design erfordert. Die erfindungsgemäßen Lösungen und deren Vorteile sind jedoch nicht nur auf Glieder aus Kunststoff beschränkt, sondern können gegebenenfalls auch bei anderen verwendeten Werkstoffen, wie beispielsweise Aluminium oder Carbonfaserwerkstoffen sinnvoll sein.

Die wenigstens eine erste Gehäuseschale kann mit der wenigstens einen zweiten Gehäuseschale insoweit einen Last tragenden Schalenverbund eines Gliedes des Roboterarms bilden. Ein solcher Schalenverbund ermöglicht eine einfache und schnelle Montage der Komponenten des Roboterarms. Der erfindungsgemäße Schalenverbund kann auch die Instandhaltung, die Instandsetzung und/oder den Service von Komponenten des Roboterarms, insbesondere von elektrischen Kabeln und Elektrokomponenten verbessern. Mit dem erfindungsgemäßen Schalenverbund kann die Steifigkeit gut sein, was jedoch abhängig von der Art der Verbindungstechnik der Schalen ist. Dabei können insbesondere die Fügestellen der Gehäuseschale problematisch sein, da diese Fügestellen im Allgemeinen steifigkeitsvermindernd und toleranzbehaftet sind.

Der erfindungsgemäße Schalenverbund kann aus zwei oder mehreren tragenden Elementen, beispielsweise Halbschalen oder Segmenten, bestehen, die meist als ein guter Kompromiss zwischen Steifigkeit und Montage-/ Servicefreundlichkeit angesehen werden können, insbesondere im Hinblick auf innenliegende Kabel und Elektronikkomponenten. Eine spezielle Schwachstelle können dabei allerdings die Verbindungsmittel sein, welche die Segmente, d.h. Gehäuseschalen, zu einem Schalenverbund verbinden, die bisher ausschließlich punktuell beispielsweise in Form einer Schraubverbindung oder Rast-/Schnappverbindung ausgeführt wurde, soweit es sich überhaupt um eine trennbare Verbindung handelte.

Durch die lokale Begrenzung der Kraftübertragung zwischen den flächig belasteten Segmenten im Stand der Technik ist die Fügestelle örtlich hochbelastet. Hierdurch kann es vor allem bei Kunststoffsegmenten leicht zu lokalen Überlastungen des Materials kommen, insbesondere im direkten Bereich von Gewinden und/oder Schrauben bzw. von Mutterauflageflächen. Zudem können mit der Zeit Kriech- oder Relaxationserscheinungen auftreten, wodurch die Verbindungsmittel von Schrauben und/oder Muttern gelockert wird oder sich die Bauteile verziehen und nicht mehr definiert aufeinander aufsitzen.

Bei ungeeigneter interner Versteifung der Schalensegmente können bei Belastung auch Wölbungseffekte zwischen den Fügepunkten auftreten.

Das Ziel der vorliegenden Erfindung ist es daher, die Verbindung zwischen zwei oder mehreren schalenartigen Elementen, insbesondere Kunststoffschalen, insbesondere Kunststoffhalbschalen für Roboterglieder so verbessern, dass diese nicht nur stabil, steif und robust verbunden sind, sondern auch der Fügeprozess sehr einfach ausgeführt werden kann, d.h. ein Zusammensetzen und/oder Auseinanderbauen auf einfache Weise, insbesondere schnell und ohne spezielle Maschinen oder Handwerkzeuge zu benötigen, möglich wird.

Die Lösungsvarianten ergeben sich aus den Patentansprüchen. Gewisse Kerngedanken dieser Erfindung liegen beispielsweise in einer optimalen Lastverteilung in der Fügestelle. Bekannte demontierbare Lösungen basieren hingegen auf punktuellen Verbindungen zwischen Bauteilen, beispielsweise mittels Schrauben, Nieten oder Verhakungen. Belastungen, wie Kräfte und/oder Momente, werden im Stand der Technik komplett oder zum Teil nur über diese lokalen Bereiche zwischen den Bauteilen übertragen, was als nachteilig erkannt wurde.

In der vorliegenden Erfindung werden die Belastungen abweichend zum Stand der Technik besonders vorteilhaft großflächig, d.h. entlang zumindest im Wesentlichen oder vollständig der gesamten Fügekante zwischen den Bauteilen übertragen. Dies verhindert einerseits eine Überlastung der Fügemittel, wie Klipse, Haken, Schrauben bzw. deren Gewinde insbesondere in Kunststoff, und andererseits verhindert dies eine lokale Überlastung des Materials um die Fügestelle herum. Unter Überlastung wird hierbei nicht ausschließlich nur ein Versagen oder Brechen des Bauteils verstanden, sondern auch eine lokale elastische oder plastische Verformung, die sich negativ auf die Gesamtnachgiebigkeit bzw. Genauigkeit das Bauteils und damit des Roboterarms auswirkt. Solche Verformungen können sowohl kurzfristig im Betrieb erfolgen, als auch langfristig, d.h. über Tage oder Wochen hinweg, bspw. durch Kriech- oder Relaxationserscheinungen auftreten.

Durch eine großflächige Verbindung wird die Last gleichmäßig bzw. gleichmäßiger verteilt und die lokalen Spannungen im Bauteil werden reduziert. Dies wird erreicht, indem eine kraftübertragende Verbindung entlang großer Bereiche, insbesondere entlang der gesamten Fügekante aufgebaut wird.

Eine solche kraftübertragende Verbindung entlang großer Bereiche, insbesondere entlang der gesamten Fügekante von Gehäuseschalen eines Gliedes des Roboterarms weist erfindungsgemäß einen Reißverschluss auf.

Demgemäß kann der Roboterarm mehrere lastübertragende Gelenke und mehrere lastübertragende Glieder aufweisend, die jeweils zwei benachbarte lastübertragende Gelenke in einer festen Anordnung zueinander miteinander verbinden, wobei mindestens eines der lastübertragenden Glieder wenigstens eine erste lastübertragende Gehäuseschale und wenigstens eine zweite lastübertragende Gehäuseschale aufweist, und die erste lastübertragende Gehäuseschale mit der zweiten lastübertragende Gehäuseschale zur Bildung eines lastübertragenden hohlen Gliedes durch Verbindungsmittel formschlüssig verbunden ist, wobei die Verbindungsmittel wenigstens einen Reißverschluss aufweisen. Unter lastübertragenden Gelenken, lastübertragenden Gliedern und lastübertragenden Gehäuseschalen werden Bauteile des Roboterarms verstanden, welche das Eigengewichte des Roboterarms selbst tragen können und darüber hinaus auch eine an dem Roboterarm angebrachte Last tragen können. Die Last kann beispielsweise ein von dem Roboterarm geführtes Werkzeug sein, ein am Flansch des Roboterarms befestigter Greifer sein und/oder ein von dem Werkzeug oder Greifer gehandhabtes oder gegriffenes Werkstück sein.

Unter einem erfindungsgemäßen Reißverschluss werden nicht nur solche Reißverschlüsse mit einer Vielzahl von ineinandergreifenden Zähnen oder Krampen verstanden, wie sie bereits aus dem Textilbereich bekannt sind, sondern auch Schiebeverschlussleisten wie sie beispielsweise aus dem Bereich der wiederverschließbaren Kunststoffbeutel bekannt sind.

Der Reißverschluss bildet ein linienförmiges Verbindungsmittel mit einem Schieber, welches die eine Gehäuseschale mit der anderen Gehäuseschale nicht nur an wenigen diskreten Stellen oder Punkten verbindet, sondern über die Längserstreckungen der jeweiligen Verbindungskanten von einer Gehäuseschale und anderer Gehäuseschale hinweg zumindest weitgehen oder vollständig kontinuierlich verbindet.

Der Reißverschluss kann somit ein gezahnter Reißverschluss und/oder ein zahnloser Reißverschluss, wie zum Beispiel ein Paar von Schiebeverschlussleisten sein.

Der Reißverschluss kann ein erstes Band aufweisen, das an der ersten Gehäuseschale befestigt ist und kann ein zweites Band aufweisen, das an der zweiten Gehäuseschale befestigt ist, derart, dass der Reißverschluss in seinem geschlossenen Zustand wenigstens einen Spaltabschnitt in der Trennebene zwischen der ersten Gehäuseschale und der zweiten Gehäuseschale überdeckt.

In einer ersten grundlegenden Ausführungsvariante kann die erste Gehäuseschale eine Verbindungskante aufweisen, die zweite Gehäuseschale kann eine Gegenverbindungskante aufweisen, die in einem zusammengefügten Zustand von erster Gehäuseschale und zweiter Gehäuseschale auf der Verbindungskante der ersten Gehäuseschale aufliegen, wobei der Reißverschluss ausgebildet ist, sowohl Scherkräfte längs zu Verbindungskante und Gegenverbindungskante, als auch Scherkräfte quer zu Verbindungskante und Gegenverbindungskante, sowie Zugkräfte senkrecht zur Trennebene von Verbindungskante und Gegenverbindungskante aufzunehmen.

Der erfindungsgemäße Reißverschluss bildet somit ein linienförmiges Verbindungsmittel, das in dieser Ausführungsform nicht nur Zugkräfte senkrecht zur Verbindungsebene aufnimmt, sondern auch Scher- bzw. Querkräfte sowohl längs als auch quer zur Hauptverbindungsrichtung, d.h. zur Längserstreckung der Verbindungskante und Gegenverbindungskante aufnimmt. Druckkräfte - senkrecht zur Verbindungsebene - können über die aufliegende Flächen von Verbindungskante und Gegenverbindungskante übertragen werden. Das Verbindungsmittel, d.h. der erfindungsgemäße Reißverschluss kann dabei entweder viele einzelne Formelemente, d.h. Zähne aufweisen, die formschlüssig ineinandergreifen oder der erfindungsgemäße Reißverschluss kann ein durchgängiges Profillippenpaar, d.h. Schiebeverschlussleisten welche formschlüssig und/oder kraftschlüssig zusammengepresst werden.

In dieser ersten grundlegenden Ausführungsvariante werden abgesehen von den Druckkräften, welche die gegenüberliegenden Gehäuseschalen aufeinanderdrücken, alle sonstigen im betreffenden Glied vorrangig aufgrund der Last auftretenden Kräfte und Momente durch den Reißverschluss übertragen.

In den im Folgenden beschriebenen weiteren grundlegenden Ausführungsvarianten sind zusätzliche formschlüssige Verbindungsmittel beschrieben, welche mit dem jeweiligen Reißverschluss derart zusammenwirken, dass Kräfte und Momente in bestimmten d.h. ausgewählten Richtungen von den Reißverschlüssen abgehalten werden und über diese jeweiligen zusätzliche formschlüssige Verbindungsmittel weitergeleitet werden, um den entsprechenden Reißverschluss von dieser Kraft oder diesem Moment zu entlasten. In jedem dieser Fälle verbleibt jedoch mindestens eine Kraftrichtung, vorzugsweise die Zugkraft senkrecht zur Trennebene von Verbindungskante der ersten Gehäuseschale und Gegenverbindungskante der zweiten Gehäuseschale. Die Zugkraft senkrecht zur Trennebene von Verbindungskante der ersten Gehäuseschale und Gegenverbindungskante der zweiten Gehäuseschale kann dabei eine Teilkraftkomponente einer anderen Kraft oder einer komplexeren Kraft sein, die beispielsweise dann auftritt, wenn die Trennebene nicht senkrecht zur Trennrichtung verläuft, in der die erste Gehäuseschale und die zweite Gehäuseschale zum Trennen auseinanderbewegt werden.

In einer zweiten grundlegenden Ausführungsvariante können die Verbindungskante der ersten Gehäuseschale und die Gegenverbindungskante der zweiten Gehäuseschale zur Übertragung von Scherkräften quer zu Verbindungskante und Gegenverbindungskante korrespondierend abgesetzt ausgebildet sein, wobei der Reißverschluss ausgebildet ist, sowohl Scherkräfte längs zu Verbindungskante und Gegenverbindungskante, als auch Zugkräfte senkrecht zur Trennebene von Verbindungskante und Gegenverbindungskante aufzunehmen.

Insbesondere können die Verbindungskante der ersten Gehäuseschale und die Gegenverbindungskante der zweiten Gehäuseschale zur Übertragung von Scherkräften quer zu Verbindungskante und Gegenverbindungskante korrespondierend mittels einer Zapfenverbindung oder Nut-Federverbindung abgesetzt ausgebildet sein, wobei der Reißverschluss ausgebildet ist, sowohl Scherkräfte längs zu Verbindungskante und Gegenverbindungskante, als auch Zugkräfte senkrecht zur Trennebene von Verbindungskante und Gegenverbindungskante aufzunehmen.

In dieser zweiten grundlegenden Ausführungsvariante können die Zapfenverbindungen oder Nut-Federverbindungen sich längs der Längserstreckungen von Verbindungskante und Gegenverbindungskante erstrecken, so dass ein seitliches Ausweichen der ersten Gehäuseschale relativ zur zweiten Gehäuseschale durch die Zapfenverbindungen oder Nut-Federverbindungen verhindert ist. Die entsprechenden Kräfte müssen dann nicht mehr von dem wenigstens einen Reißverschluss aufgenommen werden.

Die Verbindungskante der ersten Gehäuseschale und die Gegenverbindungskante der zweiten Gehäuseschale können zur Übertragung von Scherkräften quer zu Verbindungskante und Gegenverbindungskante korrespondierend abgesetzt ausgebildet sein, indem die Verbindungskante der ersten Gehäuseschale und/oder die Gegenverbindungskante der zweiten Gehäuseschale eine vorspringende Rippe aufweist, an welcher die jeweils andere Gehäuseschale bündig anliegt.

In dieser Ausführungsvariante wird die Scherkraft quer zur Hauptverbindungsrichtung, d.h. quer zur Längserstreckung der Verbindungskante und Gegenverbindungskante abweichend von der bisherigen Beschreibung von einem Flächenpaar auf der Verbindungskante und der Gegenverbindungskante übertragen.

In einer dritten grundlegenden Ausführungsvariante können die Verbindungskante der ersten Gehäuseschale und die Gegenverbindungskante der zweiten Gehäuseschale zur Übertragung von Scherkräften längs zu Verbindungskante und Gegenverbindungskante korrespondierend mit formschlüssig ineinandergreifenden Zähnen ausgebildet sein, wobei der Reißverschluss ausgebildet ist, sowohl Scherkräfte quer zu Verbindungskante und Gegenverbindungskante, als auch Zugkräfte senkrecht zur Trennebene von Verbindungskante und Gegenverbindungskante aufzunehmen.

Das Merkmal wonach die Verbindungskante der ersten Gehäuseschale und die Gegenverbindungskante der zweiten Gehäuseschale zur Übertragung von Scherkräften längs zu Verbindungskante und Gegenverbindungskante korrespondierend mit formschlüssig ineinandergreifenden Zähnen ausgebildet ist, bedeutet, dass die erste Gehäuseschale mit ersten Zähnen ausgestattet sein kann und die zweite Gehäuseschale entsprechend ineinandergreifend abgestimmte zweite Zähne oder Gegenzähne aufweisen kann, die mit den Zähnen der erste Gehäuseschale formschlüssig zusammenwirken. Dies kann analog einer Zahnradpaarung ausgebildet sein, wie sie von Getriebezahnrädern her als solches bekannt ist.

In dieser dritten grundlegenden Ausführungsvariante übernehmen die Zähne eine Kraftübertragung sowohl längs als auch quer zur Längserstreckung von Verbindungskante und Gegenverbindungskante, so dass diese Kräfte nicht mehr von dem wenigstens einen Reißverschluss aufgenommen werden müssen.

Zur Bildung der formschlüssig ineinandergreifenden Zähne kann die erste Gehäuseschale von ihrer Verbindungskante vorspringende Zähne aufweisen, die in Längsrichtung der Verbindungskante angeschrägte Zahnflanken aufweisen, derart, dass sich die Zähne vom Zahngrund in Richtung Zahnkopf verjüngen, und die zweite Gehäuseschale kann dabei von ihrer Gegenverbindungskante vorspringende Gegenzähne aufweisen, die in Längsrichtung der Gegenverbindungskante zu den Zähnen der ersten Gehäuseschale korrespondierend angeschrägte Gegenzahnflanken aufweisen, derart, dass sich die Gegenzähne vom Zahngrund in Richtung Zahnkopf verjüngen, und in einem zusammengefügten Zustand von erster Gehäuseschale und zweiter Gehäuseschale die Zahnflanken bündig an den Gegenzahnflanken anliegen.

In einer vierten grundlegenden Ausführungsvariante können die Verbindungskante der ersten Gehäuseschale und die Gegenverbindungskante der zweiten Gehäuseschale zur Übertragung von Scherkräften längs zu Verbindungskante und Gegenverbindungskante, und von Scherkräften quer zu Verbindungskante und Gegenverbindungskante korrespondierend mit formschlüssig ineinandergreifenden Zähnen ausgebildet sein, wobei der Reißverschluss ausgebildet ist, lediglich Zugkräfte senkrecht zur Trennebene von Verbindungskante und Gegenverbindungskante aufzunehmen.

In dieser Ausführungsform wird das linienförmige Verbindungsmittel lediglich Zugkräfte senkrecht zur Verbindungsebene aufnehmen, eine Belastungsart für die es ideal geeignet ist. Alle weiteren Belastungsrichtungen, wie Druckkräfte sowie Scher- bzw. Querkräfte in allen anderen Richtungen, werden über direkten Kontakt der zusätzlichen Funktionsflächenpaarungen, d.h. den Zähnen übertragen. Diese Ausführungsform ist zwar von der Gestaltung aufwändiger, da zusätzliche Formelemente benötigt werden, sie hat jedoch den Vorteil, dass die Steifigkeit und die Festigkeit an der Verbindungsstelle nochmals gezielt erhöht werden kann.

Zur Bildung der formschlüssig ineinandergreifenden Zähne kann die erste Gehäuseschale von ihrer Verbindungskante vorspringende Zähne aufweisen, die in Längsrichtung und Querrichtung der Verbindungskante angeschrägte Zahnflanken aufweisen, derart, dass sich die Zähne sowohl vom Zahngrund in Richtung Zahnkopf als auch in Querrichtung verjüngen, und die zweite Gehäuseschale kann dabei von ihrer Gegenverbindungskante vorspringende Gegenzähne aufweisen, die in Längsrichtung und Querrichtung der Gegenverbindungskante zu den Zähnen der ersten Gehäuseschale korrespondierend angeschrägte Gegenzahnflanken aufweisen, derart, dass sich die Gegenzähne sowohl vom Zahngrund in Richtung Zahnkopf als auch in Querrichtung verjüngen, und in einem zusammengefügten Zustand von erster Gehäuseschale und zweiter Gehäuseschale die Zahnflanken bündig an den Gegenzahnflanken anliegen.

Diese Ausführungsform sieht demgemäß vor, dass zackenförmige oder zahnförmige Erhebungen durchgängig, d.h. ohne oder nur mit wenigen Unterbrechungen, auf den jeweiligen Verbindungskanten der Bauteile von Gehäuseschalen des Gliedes platziert sind, wobei die zackenförmige oder zahnförmige Erhebungen jeweils eine spezielle Geometrie besitzen. Diese Geometrie stellt sicher, dass die Bauteile einerseits spielfrei aufeinandersitzen und ermöglicht andererseits, dass Belastungen, wie Kräfte und/oder Momente, in allen Richtungen - mit Ausnahme der Zugrichtung - übertragen werden können. Dafür sind die Zähne entsprechend jeweils zweifach mit abgeschrägten Funktionsflächen versehen, die nach dem Fügen jeweils paarweise mit den Funktionsflächen des anderen Bauteils in Kontakt stehen. Die Geometrie ist so gewählt, dass die Zähne mit Abstand zwischen Zahnfuß der einen Gehäuseschale und Zahnkopf der anderen Gehäuseschale aufeinander sitzen, wohingegen die Zahnflanken sich berühren. Dies ist notwendig um ein spielfreies Verspannen sicherzustellen, welches beim Schließen des Reißverschlusses erfolgt und die Zähne aufeinander drückt. Neben den Zähnen kann auch pro Verbindungskante ein zusätzlicher Steg bei einem Fügepartner erforderlich sein. Dieser Steg kann sich am Rücken der Zähne des gegenüberliegenden Bauteils abstützen und Kräfte quer zur Hauptverbindungskante aufnehmen. Mit diesem Aufbau ist jede Verbindungskante einzeln in allen drei Raumrichtungen definiert und selbsttragend.

Um eine ausreichende Materialstärke zur Realisierung der Verzahnung auch bei dünnen leichten Bauteilen zur Verfügung stellen, kann die Wand im Bereich der Verbindungskante verdickt sein. Eine ergänzende oder alternative Verdickung nach innen ist auch möglich, kann jedoch eine kompliziertere Entformung, bspw. beim Spritzgießprozess, bedeuten. Eine Verdickung kann ggf. auch aus optischen Gründen unerwünscht sein. Dieser Effekt ist allerdings sehr gering und kann gut durch die äußere Formgebung kaschiert werden.

In einer fünften grundlegenden Ausführungsvariante können die erste Gehäuseschale und die zweite Gehäuseschale zur Übertragung von Scherkräften längs zu Verbindungskante und Gegenverbindungskante, und von Scherkräften quer zu Verbindungskante und Gegenverbindungskante korrespondierend mit formschlüssig ineinandergreifenden, innenliegenden Versteifungsrippen ausgebildet sein, wobei der Reißverschluss ausgebildet ist, lediglich Zugkräfte senkrecht zur Trennebene von Verbindungskante und Gegenverbindungskante aufzunehmen.

In dieser Ausführungsvariante wird höchste Steifigkeit bzw. Festigkeit mit gleichzeitig einfacher Fertigung kombiniert. Dabei kann eine optisch unveränderte Außenfläche erzielt werden, die besonders vorteilhaft ist. Bei dieser beispielhaften Variante werden die Zähne bzw. wird die Verzahnung nach innen versetzt und durch einen Rippenaufbau ergänzt. Dabei stützen sich die Rippen der beiden Bauteile immer so gegeneinander ab, dass ein definierter Formschluss in Längs- und Quersichtung der Hauptverbindungsrichtung entsteht.

So liegen beispielsweise Funktionsflächen der Rippen des einen Bauteils, d.h. der einen Gehäuseschale auf Funktionsflächen der Rippen des anderen Bauteils, d.h. der anderen Gehäuseschale auf, sodass Längskräfte übertragen werden können. Die Rippen des einen Bauteils können sich jedoch auch stirnseitig auf der innenliegenden Mantelfläche der Gehäuseschale des anderen Bauteils abstützen und so Querkräfte übertragen. Analog dazu stützen sich auch die Rippen der anderen Gehäuseschale an der Fläche des einen Bauteils, d.h. der einen Gehäuseschale ab. Die Druckkräfte zwischen den Schalen werden über eine Auflagefläche entlang der Verbindungskanten geleitet und die Zugkräfte über das linienförmige Verbindungsmittel.

Die Rippen übernehmen hier somit nicht nur Versteifungsfunktion, sondern besitzen auch eine wichtige Aufgabe in der Verbindungstechnik. Hier ist es erforderlich, dass die Rippen zumindest in den Randbereichen über die jeweiligen Halbschalen hinausragen, damit sie beim Fügen in die jeweils andere Schale hineingreifen können. Im mittleren Bereich der Bauteil-Schalen sollten die Rippen Aussparungen besitzen, damit diese nicht mit den Rippen des anderen Bauteils kollidieren und folglich elektrische Komponenten, sowie Kabel weiterhin verlegt und moniert werden können.

Das hier beschriebene Prinzip ist bis auf die genannten Elemente und Merkmale von der eigentlichen Rippenform unabhängig.

In einer weiteren Abwandlung dieser Variante können die Rippen auch randfern formschlüssig ineinandergreifen um Quer- und Längskräfte zu übertragen, beispielsweise indem Rippenelemente eines Bauteils in Schlitze eines anderen Bauteils eingreifen.

In allen Ausführungen kann die erste Gehäuseschale an ihrer äußeren Mantelwand eine sich an die Verbindungskante anschließende, sich entlang der Verbindungskante längserstreckende Aufnahmerinne aufweisen, die ausgebildet ist, den Reißverschluss zumindest im Wesentlichen mit der äußeren Mantelwand bündig abschließend aufzunehmen und/oder die zweite Gehäuseschale an ihrer äußeren Mantelwand eine sich an die Gegenverbindungskante anschließende, sich entlang der Gegenverbindungskante längserstreckende Aufnahmerinne aufweist, die ausgebildet ist, den Reißverschluss zumindest im Wesentlichen mit der äußeren Mantelwand bündig abschließend aufzunehmen.

Da Reißverschlüsse im Allgemeinen eine leicht wulstartige Form besitzen und aus rein optischen Gründen ggf. nicht auf der äußeren Mantelfläche der Schale aufliegen sollen, kann eine längsverlaufende Aufnahmerinne oder Nut entlang der Verbindungskante vorgesehen sein, um den Reißverschlussquerschnitt aufzunehmen und die Reißverschlussaußenseite insbesondere bündig mit der äußeren Fläche der Schalen abschließen zu lassen.

In allen Ausführungen kann der Reißverschluss eine Verriegelungsvorrichtung aufweisen, die ausgebildet ist, einen Schieber des Reißverschlusses in seiner Schließposition zu arretieren.

Der Reißverschluss kann im geschlossenen Zustand somit Verriegelungsvorrichtung bzw. Sicherungselemente besitzen, die ein unbeabsichtigtes Öffnen verhindern. Hierzu kann der Reißverschlussschieber in der Endstellung manuell fixiert werden oder ein Sperrelement besitzen, welches in einer heruntergeklappten Stellung der Reißverschlusslasche in den Reißverschluss gedrückt wird und eine Verschiebung des Reißverschlussschiebers entlang des Reißverschlusses verhindert.

In allen Ausführungen kann der Reißverschluss eine sich über die Länge des Reißverschlusses längserstreckende Dichtlippe aufweisen, die ausgebildet ist, Spalte, Öffnungen und/oder Ritzen im geschlossenen Reißverschluss staubgeschützt und/oder spritzwassergeschützt zu überdecken.

Der Reißverschluss kann somit außenliegend eine zusätzliche Lippe besitzen, die im verschlossenen Zustand des Reißverschlusses aufliegt und so die beiden Halbschalen abdichtet und vor Staub und Spritzwasser schützt. Der kraftschlüssige lippenartige Reißverschlusstyp beinhaltet diese Funktion bereits und dichtet im geschlossenen Zustand staubdicht und/oder wasserdicht ab.

Generell können die wenigstens eine erste Gehäuseschale und die wenigstens eine zweite Gehäuseschale jeweils aus Kunststoff hergestellt sein.

Freiliegende zahnartige Reißverschlüsse können neben den funktionalen Aspekten auch viele weitere Vorteile hinsichtlich eines progressiven Designs bieten, indem sie die Innovation als Designelement wiederspiegeln. Hier können beispielsweise die Zähne bewusst sichtbar, auffällig und/oder markant ausgeführt werden, beispielsweise indem die Größe, die Zahnform und/oder die Farbe der Zähne gezielt ausgewählt werden - beispielsweise in Form eines weißen Roboterarms mit orangefarbig verzahnten Reißverschluss-Nähten.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: einen beispielhaften Roboterarm mit mehreren Gelenken und diese Gelenke verbindenden Gliedern,
- Fig. 2: eine schematische Teilschnittdarstellung durch ein repräsentatives Glied eines Roboterarms mit zwei Gehäuseschalen, die mittels Reißverschlüssen verbunden sind, in einer erste Ausführungsform,
- Fig. 3: eine zweite Ausführungsform mit nutartig abgesetzten Verbindungskanten und Gegenverbindungskanten in einer Version mit einem gezahnten Reißverschluss,
- Fig. 4: die zweite Ausführungsform mit nutartig abgesetzten Verbindungskanten und Gegenverbindungskanten in einer abgewandelten Version mit Schiebeverschlussleisten,
- Fig. 5: eine dritte Ausführungsform mit glatten Verbindungskanten und Gegenverbindungskanten in einer Version mit ineinandergreifenden Halterippen als Versteifungsrippen in einer Explosionsdarstellung von unten, bei weggelassenem Reißverschluss,
- Fig. 6: eine dritte Ausführungsform mit glatten Verbindungskanten und Gegenverbindungskanten in einer Version mit ineinandergreifenden Halterippen als Versteifungsrippen in einer Explosionsdarstellung von oben, bei weggelassenem Reißverschluss,
- Fig. 7a-b: die dritte Ausführungsform gemäß Fig. 5 und Fig. 6 mit einem in Fig. 7a gezahnten Reißverschluss und in Fig. 7b mit einem ungezahnten Reißverschluss,
- Fig. 8: eine vergrößerte Teildarstellung der Halterippen bzw. der Versteifungsrippen der dritten Ausführungsform gemäß Fig. 5 bis Fig. 7b,
- Fig. 9: eine vierte Ausführungsform mit gezahnten Verbindungskanten und Gegenverbindungskanten in Verbindung mit ineinandergreifenden Rippen in einer Version mit einem gezahnten Reißverschluss,
- Fig. 10: die vierte Ausführungsform mit gezahnten Verbindungskanten und Gegenverbindungskanten in Verbindung mit ineinandergreifenden Rippen in einer abgewandelten Version mit Schiebeverschlussleisten,
- Fig. 11: eine vergrößerte Teildarstellung an einer Verbindungskante der einen Gehäusehälfte mit Zähnen, die sowohl in Längsrichtung der Verbindungskante als auch quer zur Längsrichtung der Verbindungskante abgeschrägt sind,
- Fig. 12: eine vergrößerte Teildarstellung an der Verbindungskante der einen Gehäusehälfte und der gegenverbindungskante der anderen Gehäusehälfte mit ineinandergreifenden Versteifungsrippen,
- Fig. 13a-d: verschiedene alternative Varianten, bei denen die Verbindungskanten der aneinander anliegenden Gehäusehälften unterschiedlich ausgebildet sind, und

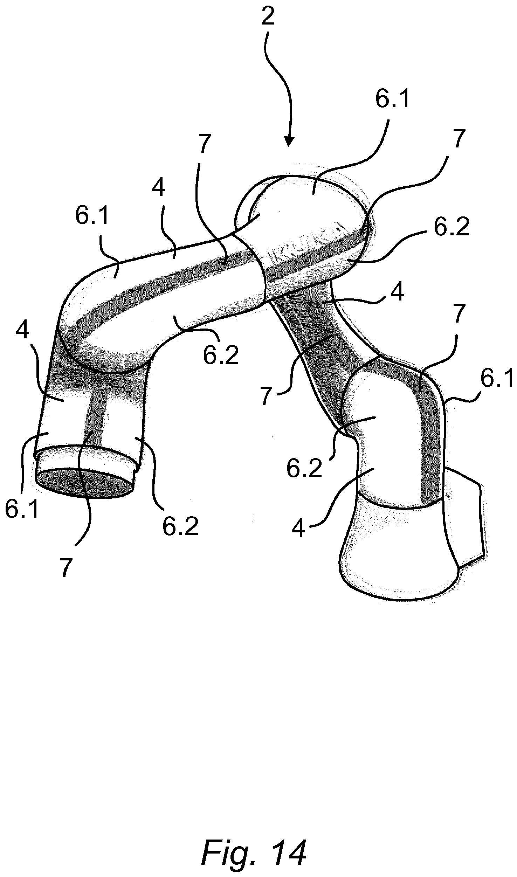

- Fig. 14: eine alternative Ausgestaltung eines Roboterarms mit sichtbaren Reißverschlüssen.

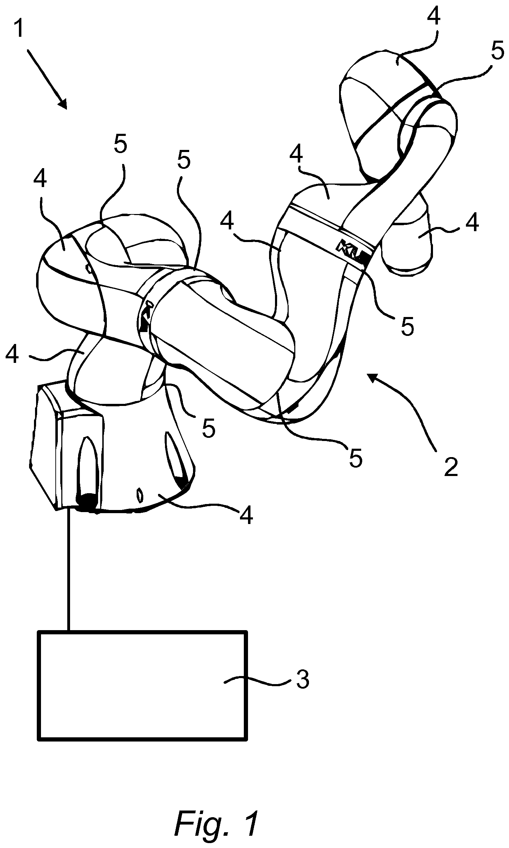

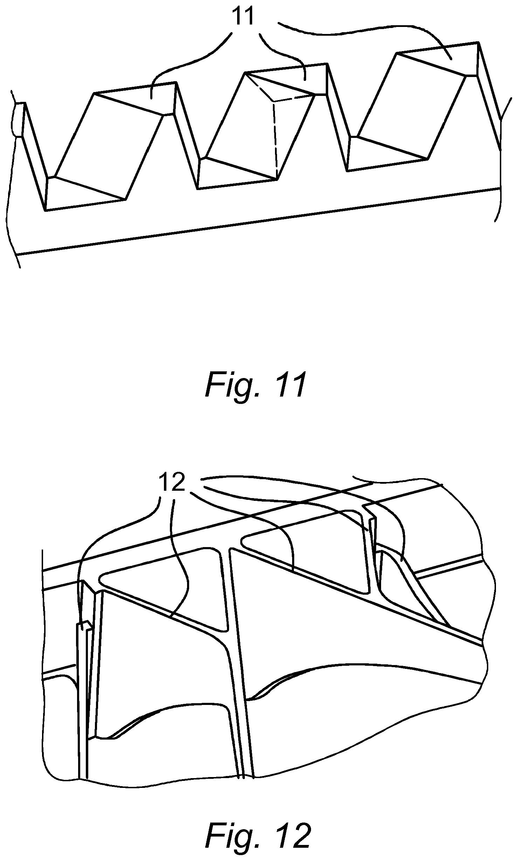

In der Fig. 1 ist ein repräsentatives Ausführungsbeispiel eines Roboter 1 gezeigt mit einem Roboterarm 2 und einer zughörigen Robotersteuerung 3. Der Roboterarm 2 weist mehrere Glieder 4 und die Glieder 4 gegeneinander verstellende Gelenke 5 auf. Jedes Gelenk 5 ist von jeweils einem Gelenkmotor des Roboterarms 2 angetrieben. Die Robotersteuerung 3 ist ausgebildet und eingerichtet, die Gelenkmotoren anzusteuern, um die Glieder 4 des Roboterarms 2 durch automatisches Verstellen der Gelenke 5 zu bewegen. Der Roboterarm 2 weist mindestens ein Glied 4 auf, das erfindungsgemäße Gehäuseschalen 6.1 und 6.2 aufweist, die mittels wenigstens eines Reißverschlusses 7 verbunden sind. Wie in Fig. 11 dargestellt können auch mehrere Glieder 5 oder auch alle Glieder 5 des Roboterarms 2 mit erfindungsgemäßen Gehäuseschalen 6.1 und 6.2 ausgestattet sein, die mittels wenigstens eines Reißverschlusses 7 verbunden sind.

Demgemäß weist der Roboterarm 2 mehrere Gelenke 5 und mehrere Glieder 4 auf, die jeweils zwei benachbarte Gelenke 5 in einer festen Anordnung zueinander miteinander verbinden, wobei mindestens eines der Glieder 4 wenigstens eine erste Gehäuseschale 6.1 und wenigstens eine zweite Gehäuseschale 6.2 aufweist, und die erste Gehäuseschale 6.1 mit der zweiten Gehäuseschale 6.2 zur Bildung eines hohlen Gliedes 4 durch Verbindungsmittel formschlüssig verbunden ist, die wenigstens einen Reißverschluss 7 aufweisen.

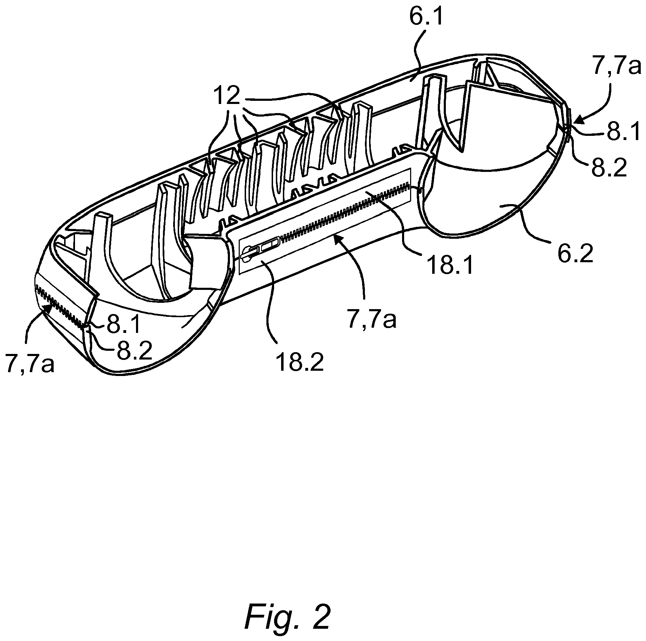

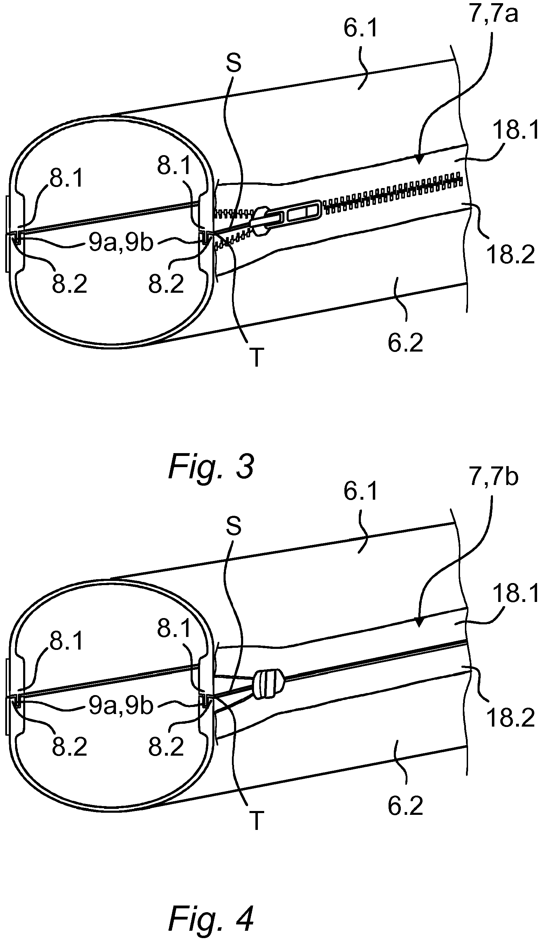

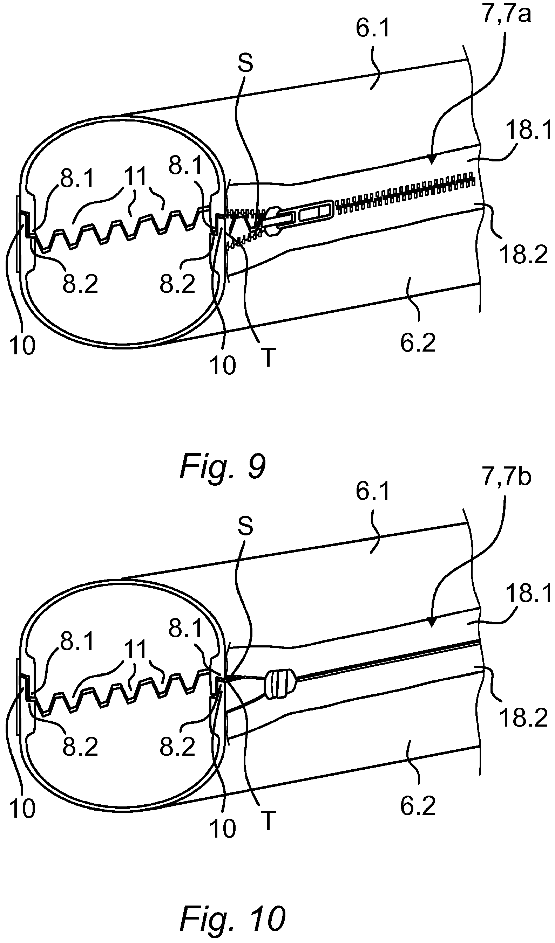

Der Reißverschluss 7 kann, wie in Fig. 2, Fig. 3, Fig. 7a und Fig. 13a-d dargestellt, ein gezahnter Reißverschluss 7a sein. Alternativ kann, auch in Kombination mit den Varianten der anderen Figuren der Reißverschluss 7, wie in Fig. 4 und Fig. 10 dargestellt, ein zahnloser Reißverschluss 7b sein. Der zahnlose Reißverschluss 7b kann beispielsweise ein Paar von Schiebeverschlussleisten aufweisen.

Der Reißverschluss 7 weist ein erstes Band 18.1 auf, das an der ersten Gehäuseschale 6.1 befestigt ist und weist ein zweites Band 18.2 auf, das an der zweiten Gehäuseschale 6.2 befestigt ist, derart, dass der Reißverschluss 7 in seinem geschlossenen Zustand wenigstens einen Spaltabschnitt S in der Trennebene T zwischen der ersten Gehäuseschale 6.1 und der zweiten Gehäuseschale 6.2 überdeckt.

In einer ersten Ausführungsform, beispielsweise gemäß Fig. 2, weist die erste Gehäuseschale 6.1 eine Verbindungskante 8.1 auf, die zweite Gehäuseschale 6.2 weist eine Gegenverbindungskante 8.2 auf, die in einem zusammengefügten Zustand von erster Gehäuseschale 6.1 und zweiter Gehäuseschale 6.2 auf der Verbindungskante 8.1 der ersten Gehäuseschale 6.1 aufliegt und der Reißverschluss 7, 7a ausgebildet ist, sowohl Scherkräfte längs zu Verbindungskante 8.1 und Gegenverbindungskante 8.2, als auch Scherkräfte quer zu Verbindungskante 8.1 und Gegenverbindungskante 8.2, sowie Zugkräfte senkrecht zur Ebene von Verbindungskante 8.1 und Gegenverbindungskante 8.2 aufzunehmen.

In einer zweiten Ausführungsform, beispielsweise gemäß Fig. 3 und Fig. 4, sind die Verbindungskante 8.1 der ersten Gehäuseschale 6.1 und die Gegenverbindungskante 8.2 der zweiten Gehäuseschale 6.2 zur Übertragung von Scherkräften quer zu Verbindungskante 8.1 und Gegenverbindungskante 8.2 korrespondierend mittels einer Zapfenverbindung 9a oder Nut-Federverbindung 9b abgesetzt ausgebildet und der Reißverschluss 7 ist ausgebildet, sowohl Scherkräfte längs zu Verbindungskante 8.1 und Gegenverbindungskante 8.2, als auch Zugkräfte senkrecht zur Ebene von Verbindungskante 8.1 und Gegenverbindungskante 8.2 aufzunehmen. Im Falle der Ausführungsvariante gemäß Fig. 3 ist der Reißverschluss 7 als ein gezahnter Reißverschluss 7a ausgebildet. Im Falle der Ausführungsvariante gemäß Fig. 4 ist der Reißverschluss 7 hingegen als ein zahnloser Reißverschluss 7b ausgebildet. Der zahnlose Reißverschluss 7b kann beispielsweise ein Paar von Schiebeverschlussleisten aufweisen.

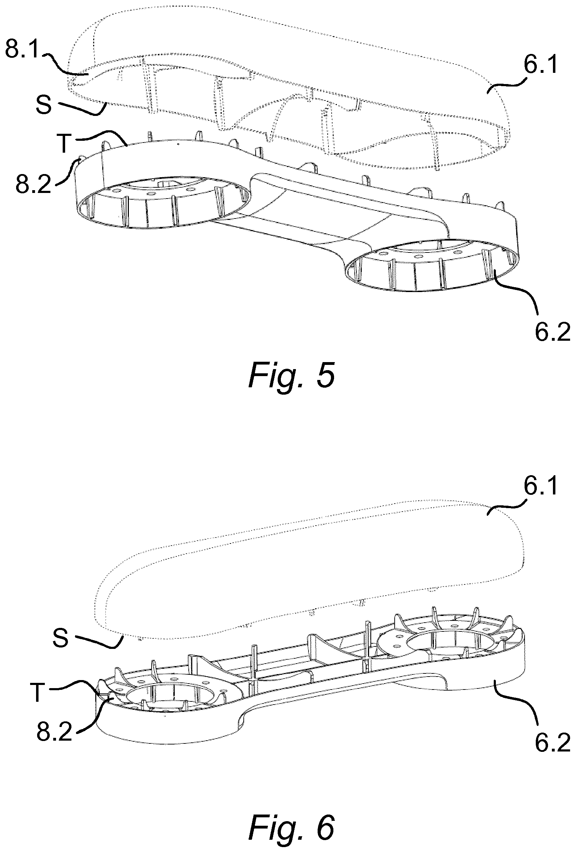

Die Verbindungskante 8.1 der ersten Gehäuseschale 6.1 und die Gegenverbindungskante 8.2 der zweiten Gehäuseschale 6.2 kann zur Übertragung von Scherkräften quer zu Verbindungskante 8.1 und Gegenverbindungskante 8.2 korrespondierend abgesetzt ausgebildet sein, indem die Verbindungskante 8.1 der ersten Gehäuseschale 6.1 und/oder die Gegenverbindungskante 8.2 der zweiten Gehäuseschale 6.2 eine vorspringende Rippe 10 aufweist, an welcher die jeweils andere Gehäuseschale 6.1, 6.2 bündig anliegt, wie dies auch in der anderen, vierten Ausführungsform gemäß Fig. 5 bis Fig. 8 der Fall ist.

In einer dritten Ausführungsform, beispielsweise gemäß Fig. 9 und Fig. 10, sind die Verbindungskante 8.1 der ersten Gehäuseschale 6.1 und die Gegenverbindungskante 8.2 der zweiten Gehäuseschale 6.2 zur Übertragung von Scherkräften längs zu Verbindungskante 6.1 und Gegenverbindungskante 6.2 korrespondierend mit formschlüssig ineinandergreifenden Zähnen 11 ausgebildet und der Reißverschluss 7 ist ausgebildet, sowohl Scherkräfte quer zu Verbindungskante 8.1 und Gegenverbindungskante 8.2, als auch Zugkräfte senkrecht zur Ebene von Verbindungskante 8.1 und Gegenverbindungskante 8.2 aufzunehmen. Im Falle der Ausführungsvariante gemäß Fig. 9 ist der Reißverschluss 7 als ein gezahnter Reißverschluss 7a ausgebildet. Im Falle der Ausführungsvariante gemäß Fig. 10 ist der Reißverschluss 7 hingegen als ein zahnloser Reißverschluss 7b ausgebildet. Der zahnlose Reißverschluss 7b kann beispielsweise ein Paar von Schiebeverschlussleisten aufweisen.

Zur Bildung der formschlüssig ineinandergreifenden Zähne 11 kann die erste Gehäuseschale 6.1 von ihrer Verbindungskante 8.1 vorspringende Zähne 11 aufweisen, die in Längsrichtung der Verbindungskante 8.1 angeschrägte Zahnflanken aufweisen, derart, dass sich die Zähne 11 vom Zahngrund in Richtung Zahnkopf verjüngen, und die zweite Gehäuseschale 6.2 kann von ihrer Gegenverbindungskante 8.2 vorspringende Gegenzähne aufweist, die in Längsrichtung der Gegenverbindungskante 8.2 zu den Zähnen 11 der ersten Gehäuseschale 6.1 korrespondierend angeschrägte Gegenzahnflanken aufweisen, derart, dass sich die Gegenzähne vom Zahngrund in Richtung Zahnkopf verjüngen, und in einem zusammengefügten Zustand von erster Gehäuseschale 6.1 und zweiter Gehäuseschale 6.2 die Zahnflanken bündig an den Gegenzahnflanken anliegen.

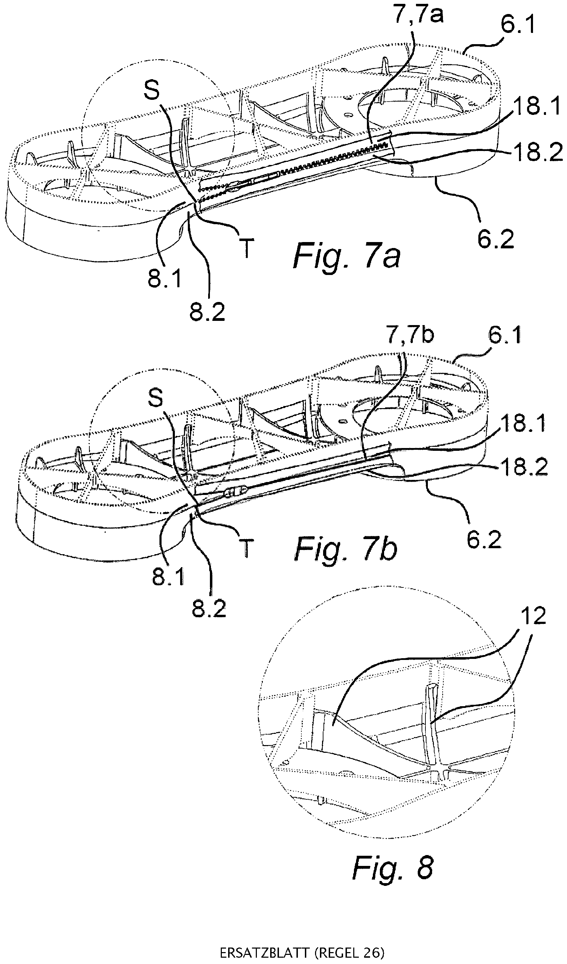

In einer vierten Ausführungsform, beispielsweise gemäß Fig. 9 und Fig. 10, sind die Verbindungskante 8.1 der ersten Gehäuseschale 6.1 und die Gegenverbindungskante 8.2 der zweiten Gehäuseschale 6.2 zur Übertragung von Scherkräften längs zu Verbindungskante 8.1 und Gegenverbindungskante 8.2, und von Scherkräften quer zu Verbindungskante 8.1 und Gegenverbindungskante 8.2 korrespondierend mit formschlüssig ineinandergreifenden Zähnen 11 ausgebildet und der Reißverschluss 7 ist ausgebildet, lediglich Zugkräfte senkrecht zur Ebene von Verbindungskante 8.1 und Gegenverbindungskante 8.2 aufzunehmen. Im Falle der Ausführungsvariante gemäß Fig. 7 ist der Reißverschluss 7 als ein gezahnter Reißverschluss 7a ausgebildet. Im Falle der Ausführungsvariante gemäß Fig. 10 ist der Reißverschluss 7 hingegen als ein zahnloser Reißverschluss 7b ausgebildet. Der zahnlose Reißverschluss 7b kann beispielsweise ein Paar von Schiebeverschlussleisten aufweisen.

Zur Bildung der formschlüssig ineinandergreifenden Zähne 11 weist die erste Gehäuseschale 6.1 von ihrer Verbindungskante 8.1 vorspringende Zähne 11 auf, die in Längsrichtung und Querrichtung der Verbindungskante 8.1 angeschrägte Zahnflanken aufweisen, derart, dass sich die Zähne 11 sowohl vom Zahngrund in Richtung Zahnkopf als auch in Querrichtung verjüngen, wie dies vergrößert auch in Fig. 11 dargestellt ist, und die zweite Gehäuseschale 6.2 weist von ihrer Gegenverbindungskante 8.2 vorspringende Gegenzähne auf, die in Längsrichtung und Querrichtung der Gegenverbindungskante 8.2 zu den Zähnen 11 der ersten Gehäuseschale 6.1 korrespondierend angeschrägte Gegenzahnflanken aufweisen, derart, dass sich die Gegenzähne sowohl vom Zahngrund in Richtung Zahnkopf als auch in Querrichtung verjüngen, und in einem zusammengefügten Zustand von erster Gehäuseschale 6.1 und zweiter Gehäuseschale 6.2 die Zahnflanken bündig an den Gegenzahnflanken anliegen.

In einer fünften Ausführungsform, beispielsweise gemäß Fig. 12, sind die erste Gehäuseschale 6.1 und die zweite Gehäuseschale 6.2 zur Übertragung von Scherkräften längs zu Verbindungskante 8.1 und Gegenverbindungskante 8.2, und von Scherkräften quer zu Verbindungskante 8.1 und Gegenverbindungskante 8.2 korrespondierend mit formschlüssig ineinandergreifenden, innenliegenden Versteifungsrippen 12 ausgebildet und der Reißverschluss 7 ausgebildet ist, lediglich Zugkräfte senkrecht zur Ebene von Verbindungskante 8.1 und Gegenverbindungskante 8.2 aufzunehmen. Auch in der fünften Ausführungsform kann der Reißverschluss 7 ein gezahnter Reißverschluss 7a sein. Alternativ kann auch in der fünften Ausführungsform der Reißverschluss 7 ein zahnloser Reißverschluss 7b sein. Der zahnlose Reißverschluss 7b kann beispielsweise ein Paar von Schiebeverschlussleisten aufweisen.

In allen Ausführungsform und Varianten kann die erste Gehäuseschale 6.1 an ihrer äußeren Mantelwand eine sich an die Verbindungskante 8.1 anschließende, sich entlang der Verbindungskante 8.1 längserstreckende Aufnahmerinne aufweisen, die ausgebildet ist, den Reißverschluss 7 zumindest im Wesentlichen mit der äußeren Mantelwand bündig abschließend aufzunehmen und/oder die zweite Gehäuseschale 6.2 kann an ihrer äußeren Mantelwand eine sich an die Gegenverbindungskante 8.2 anschließende, sich entlang der Gegenverbindungskante 8.2 längserstreckende Aufnahmerinne aufweisen, die ausgebildet ist, den Reißverschluss 7 zumindest im Wesentlichen mit der äußeren Mantelwand bündig abschließend aufzunehmen.

In allen Ausführungsform und Varianten kann die wenigstens eine erste Gehäuseschale 6.1 und die wenigstens eine zweite Gehäuseschale 6.2 jeweils aus Kunststoff hergestellt sein.

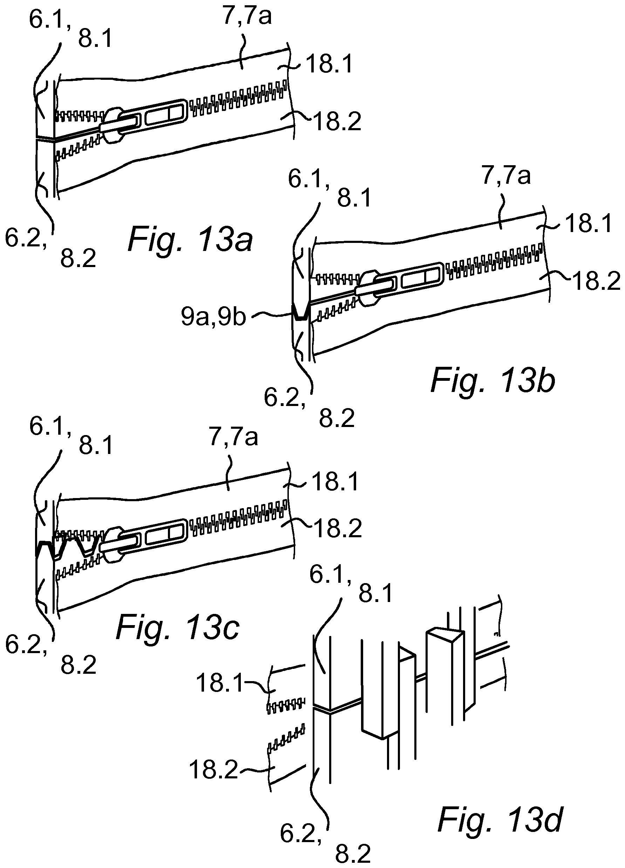

In den verschiedene alternativen Varianten, beispielsweise gemäß Fig. 13b und Fig. 13c, sind die Verbindungskante 8.1 der ersten Gehäuseschale 6.1 und die Gegenverbindungskante 8.2 der zweiten Gehäuseschale 6.2 zur Übertragung von Scherkräften quer zu Verbindungskante 8.1 und Gegenverbindungskante 8.2 korrespondierend mittels einer Zapfenverbindung 9a oder Nut-Federverbindung 9b abgesetzt ausgebildet.

Die alternative Variante gemäß Fig. 13a weist eine ebene Verbindungskante 8.1 der ersten Gehäuseschale 6.1 und eine ebene Gegenverbindungskante 8.2 der zweiten Gehäuseschale 6.2 analog der Fig. 2 auf.

Die alternative Variante gemäß Fig. 13d weist in Verbindung mit ebenen Verbindungskante 8.1, 8.2, d.h. einem einfachen Stoß auf, und zusätzlich ineinandergreifende Halterippen als Versteifungsrippen 12, die ähnlich der Version gemäß Fig. 5 und Fig. 6 ausgebildet sein können.

## Patentansprüche

1. Roboterarm, aufweisend mehrere Gelenke (5) und mehrere Glieder (4), die jeweils zwei benachbarte Gelenke (5) in einer festen Anordnung zueinander miteinander verbinden, wobei mindestens eines der Glieder (4) wenigstens eine erste Gehäuseschale (6.1) und wenigstens eine zweite Gehäuseschale (6.2) aufweist, und die erste Gehäuseschale (6.1) mit der zweiten Gehäuseschale (6.2) zur Bildung eines hohlen Gliedes (5) durch Verbindungsmittel formschlüssig verbunden ist, **dadurch gekennzeichnet, dass** die Verbindungsmittel wenigstens einen Reißverschluss (7, 7a, 7b) aufweisen.

2. Roboterarm nach Anspruch 1, **dadurch gekennzeichnet, dass** der Reißverschluss (7) ein gezahnter Reißverschluss (7a), ein zahnloser Reißverschluss (7b) und/oder ein Paar von Schiebeverschlussleisten ist.

3. Roboterarm nach Anspruch 1 oder 2, **dadurch gekennzeichnet, dass** der Reißverschluss (7, 7a, 7b) ein erstes Band (18.1) aufweist, das an der ersten Gehäuseschale (6.1) befestigt ist und ein zweites Band (18.2) aufweist, das an der zweiten Gehäuseschale (6.2) befestigt ist, derart, dass der Reißverschluss (7, 7a, 7b) in seinem geschlossenen Zustand wenigstens einen Spaltabschnitt (S) in der Trennebene (T) zwischen der ersten Gehäuseschale (6.1) und der zweiten Gehäuseschale (6.2) überdeckt.

4. Roboterarm nach einem der Ansprüche 1 bis 3, **dadurch gekennzeichnet, dass** die erste Gehäuseschale (6.1) eine Verbindungskante (8.1) aufweist, die zweite Gehäuseschale (6.2) eine Gegenverbindungskante (8.2) aufweist, die in einem zusammengefügten Zustand von erster Gehäuseschale (6.1) und zweiter Gehäuseschale (6.2) auf der Verbindungskante (8.1) der ersten Gehäuseschale (6.1) aufliegt und der Reißverschluss (7, 7a, 7b) ausgebildet ist, sowohl Scherkräfte längs zu Verbindungskante (8.1) und Gegenverbindungskante (8.2), als auch Scherkräfte quer zu Verbindungskante (8.1) und Gegenverbindungskante (8.2), sowie Zugkräfte senkrecht zur Trennebene (T) von Verbindungskante (8.1) und Gegenverbindungskante (8.2) aufzunehmen.

5. Roboterarm nach einem der Ansprüche 1 bis 3, **dadurch gekennzeichnet, dass** die Verbindungskante (8.1) der ersten Gehäuseschale (6.1) und die Gegenverbindungskante (8.2) der zweiten Gehäuseschale (6.2) zur Übertragung von Scherkräften quer zu Verbindungskante (8.1) und Gegenverbindungskante (8.2) korrespondierend insbesondere mittels einer Zapfenverbindung (9a) oder Nut-Federverbindung (9b) abgesetzt ausgebildet sind und der Reißverschluss (7, 7a, 7b) ausgebildet ist, sowohl Scherkräfte längs zu Verbindungskante (8.1) und Gegenverbindungskante (8.2), als auch Zugkräfte senkrecht zur Trennebene (T) von Verbindungskante (8.1) und Gegenverbindungskante (8.2) aufzunehmen.

6. Roboterarm nach Anspruch 5, **dadurch gekennzeichnet, dass** die Verbindungskante (8.1) der ersten Gehäuseschale (6.1) und die Gegenverbindungskante (8.2) der zweiten Gehäuseschale (6.2) zur Übertragung von Scherkräften quer zu Verbindungskante (8.1) und Gegenverbindungskante (8.2) korrespondierend abgesetzt ausgebildet sind, indem die Verbindungskante (8.1) der ersten Gehäuseschale (6.1) und/oder die Gegenverbindungskante (8.2) der zweiten Gehäuseschale (6.2) eine vorspringende Rippe (10) aufweist, an welcher die jeweils andere Gehäuseschale (6.1, 6.2) bündig anliegt.

7. Roboterarm nach einem der Ansprüche 1 bis 3, **dadurch gekennzeichnet, dass** die erste Gehäuseschale (6.1) und die zweite Gehäuseschale (6.2) zur Übertragung von Scherkräften längs zu Verbindungskante (8.1) und Gegenverbindungskante (8.2), und von Scherkräften quer zu Verbindungskante (8.1) und Gegenverbindungskante (8.2) korrespondierend mit formschlüssig ineinandergreifenden, innenliegenden Versteifungsrippen (12) ausgebildet sind und der Reißverschluss (7, 7a, 7b) ausgebildet ist, lediglich Zugkräfte senkrecht zur Trennebene (T) von Verbindungskante (8.1) und Gegenverbindungskante (8.2) aufzunehmen.

8. Roboterarm nach einem der Ansprüche 1 bis 3, **dadurch gekennzeichnet, dass** die Verbindungskante (8.1) der ersten Gehäuseschale (6.1) und die Gegenverbindungskante (8.2) der zweiten Gehäuseschale (6.2) zur Übertragung von Scherkräften längs zu Verbindungskante (8.1) und Gegenverbindungskante (8.2) korrespondierend mit formschlüssig ineinandergreifenden Zähnen (11) ausgebildet sind und der Reißverschluss (7, 7a, 7b) ausgebildet ist, sowohl Scherkräfte quer zu Verbindungskante (8.1) und Gegenverbindungskante (8.2) , als auch Zugkräfte senkrecht zur Trennebene (T) von Verbindungskante (8.1) und Gegenverbindungskante (8.2) aufzunehmen, und dass zur Bildung der formschlüssig ineinandergreifenden Zähne (11) die erste Gehäuseschale (6.1) von ihrer Verbindungskante (8.1) vorspringende Zähne (11) aufweist, die in Längsrichtung der Verbindungskante (8.1) angeschrägte Zahnflanken aufweisen, derart, dass sich die Zähne (11) vom Zahngrund in Richtung Zahnkopf verjüngen, und die zweite Gehäuseschale (6.2) von ihrer Gegenverbindungskante (8.2) vorspringende Gegenzähne aufweist, die in Längsrichtung der Gegenverbindungskante (8.2) zu den Zähnen (11) der ersten Gehäuseschale (6.1) korrespondierend angeschrägte Gegenzahnflanken aufweisen, derart, dass sich die Gegenzähne vom Zahngrund in Richtung Zahnkopf verjüngen, und in einem zusammengefügten Zustand von erster Gehäuseschale (6.1) und zweiter Gehäuseschale (6.2) die Zahnflanken bündig an den Gegenzahnflanken anliegen.

9. Roboterarm nach einem der Ansprüche 1 bis 3, **dadurch gekennzeichnet, dass** die Verbindungskante (8.1) der ersten Gehäuseschale (6.1) und die Gegenverbindungskante (8.2) der zweiten Gehäuseschale (6.2) zur Übertragung von Scherkräften längs zu Verbindungskante (8.1) und Gegenverbindungskante (8.2), und von Scherkräften quer zu Verbindungskante (8.1) und Gegenverbindungskante (8.2) korrespondierend mit formschlüssig ineinandergreifenden Zähnen (11) ausgebildet sind und der Reißverschluss (7, 7a, 7b) ausgebildet ist, lediglich Zugkräfte senkrecht zur Trennebene (T) von Verbindungskante (8.1) und Gegenverbindungskante (8.2) aufzunehmen.

10. Roboterarm nach Anspruch 9, **dadurch gekennzeichnet, dass** zur Bildung der formschlüssig ineinandergreifenden Zähne (11) die erste Gehäuseschale (6.1) von ihrer Verbindungskante (8.1) vorspringende Zähne (11) aufweist, die in Längsrichtung und Querrichtung der Verbindungskante (8.1) angeschrägte Zahnflanken aufweisen, derart, dass sich die Zähne (11) sowohl vom Zahngrund in Richtung Zahnkopf als auch in Querrichtung verjüngen, und die zweite Gehäuseschale (6.2) von ihrer Gegenverbindungskante (8.2) vorspringende Gegenzähne aufweist, die in Längsrichtung und Querrichtung der Gegenverbindungskante (8.2) zu den Zähnen (11) der ersten Gehäuseschale (6.1) korrespondierend angeschrägte Gegenzahnflanken aufweisen, derart, dass sich die Gegenzähne sowohl vom Zahngrund in Richtung Zahnkopf als auch in Querrichtung verjüngen, und in einem zusammengefügten Zustand von erster Gehäuseschale (6.1) und zweiter Gehäuseschale (6.2) die Zahnflanken bündig an den Gegenzahnflanken anliegen.

11. Roboterarm nach einem der Ansprüche 1 bis 10, **dadurch gekennzeichnet, dass** die erste Gehäuseschale (6.1) an ihrer äußeren Mantelwand eine sich an die Verbindungskante (8.1) anschließende, sich entlang der Verbindungskante (8.1) längserstreckende Aufnahmerinne aufweist, die ausgebildet ist, den Reißverschluss (7, 7a, 7b) zumindest im Wesentlichen mit der äußeren Mantelwand bündig abschließend aufzunehmen und/oder die zweite Gehäuseschale (6.2) an ihrer äußeren Mantelwand eine sich an die Gegenverbindungskante (8.2) anschließende, sich entlang der Gegenverbindungskante (8.2) längserstreckende Aufnahmerinne aufweist, die ausgebildet ist, den Reißverschluss (7, 7a, 7b) zumindest im Wesentlichen mit der äußeren Mantelwand bündig abschließend aufzunehmen.

12. Roboterarm nach einem der Ansprüche 1 bis 11, **dadurch gekennzeichnet, dass** der Reißverschluss (7, 7a, 7b) eine Verriegelungsvorrichtung aufweist, die ausgebildet ist, einen Schieber des Reißverschlusses (7, 7a, 7b) in seiner Schließposition zu arretieren.

13. Roboterarm nach einem der Ansprüche 1 bis 12, **dadurch gekennzeichnet, dass** der Reißverschluss (7, 7a, 7b) eine sich über die Länge des Reißverschlusses (7, 7a, 7b) längserstreckende Dichtlippe aufweist, die ausgebildet ist, Spalte, Öffnungen und/oder Ritzen im geschlossenen Reißverschluss (7, 7a, 7b) staubgeschützt und/oder spritzwassergeschützt zu überdecken.

14. Roboterarm nach einem der Ansprüche 1 bis 13, **dadurch gekennzeichnet, dass** die wenigstens eine erste Gehäuseschale (6.1) und die wenigstens eine zweite Gehäuseschale (6.2) jeweils aus Kunststoff hergestellt sind.

## Claims

1. Robot arm, having a plurality of joints (5) and a plurality of links (4), each of which connects two adjacent joints (5) in a fixed arrangement relative to one another, wherein at least one of the links (4) has at least one first housing shell (6.1) and at least one second housing shell (6.2), and the first housing shell(6.1) is positively connected to the second housing shell (6.2) by connecting means to form a hollow link (5), **characterized in that** the connecting means have at least one zipper (7, 7a, 7b).

2. Robot arm according to claim 1, **characterized in that** the zipper (7) a serrated zipper (7a), a toothless zipper (7b) and/or a pair of sliding closure strips.

3. Robot arm according to claim 1 or 2, **characterized in that** the zipper (7, 7a, 7b) has a first band (18.1), which is attached to the first case shell (6.1) and has a second band (18.2) which is attached to the second casing shell (6.2) in such a way that the zipper (7, 7a, 7b) in its closed state has at least one gap section (S) in the dividing plane (T) between the first housing shell (6.1) and the second housing shell (6.2).

4. Robotic arm according to any one of claims 1 to 3, **characterized in that** the first housing shell (6.1) contains a connecting edge (8.1), the second housing shaft(6.2) has a mating connecting edge (8.2) which rests on the connecting edge (8.1) of the first housing shell (6.1) in a joined state of the first housing shell (6.1) and the zipper (7, 7a, 7b) shear forces longitudinally to the connecting edge (8.1) and mating connection edge (8.2), as well as shear forces transverse to connecting edge (8.1) and mating connection edge (8.2), as well as tensile forces perpendicular to the parting plane (T) of connecting Edge (8.1) and Mating Connecting Edge (8.2).

5. A robot arm according to any one of claims 1 to 3, **characterized in that** the connecting edge (8.1) of the first housing shell (6.1) and the mating connecting edge (8.2) of the second housing shell (6.2) are used to transmit Shear forces transverse to connecting edge (8.1) and counter-connecting edge (8.2) corresponding, in particular by means of a tenon connection (9a) or groove spring connection (9b) and the zipper (7, 7a, 7b), both Shear forces longitudinally to the connecting edge (8.1) and counter-connecting edge (8.2), as well as tensile forces perpendicular to the parting plane (T) of the connecting edge (8.1) and the mating connecting edge (8.2).

6. Robotic arm according to claim 5, **characterized in that** the connecting edge (8.1) of the first housing shell (6.1) and the mating edge (8.2) of the second housing shell (6.2) for the transmission of shear forces transversely to the connecting edge (8.1) and the mating connection edge (8.2) are correspondingly offset by the connecting edge (8.1) of the first housing shell (6.1) and/or the mating edge (8.2) of the two-(6.2) has a protruding rib (10) to which the other shell (6.1, 6.2) lies flush.

7. Robotic arm according to one of claims 1 to 3, **characterized in that** the first case shell (6.1) and the second housing shell (6.2) for the transmission of shear forces longitudinally to the connecting edge (8.1) and mating connecting edge (8.2), and of shear forces transversely to the connecting edge (8.1) and mating connecting edge (8.2)pondering with form-fitting, interlocking, stiffening ribs (12) and the zipper (7, 7a, 7b) is formed, only tensile forces perpendicular to the parting plane (T) of the connecting edge (8.1) and the mating connecting edge (8.2) are applied.

8. Robot arm according to any one of claims 1 to 3, **characterized in that** the connecting edge (8.1) of the first Housing shell (6.1) and the mating edge (8.2) of the second housing shell (6.2) for the transmission of shear forces are formed longitudinally to the connecting edge (8.1) and the mating connecting edge (8.2) corresponding to form-fitting interlocking teeth (11) and the zipper (7, 7a, 7b), both shear forces transverse to the connecting edge (8.1) and the counter connecting edge (8.2), as well as tensile forces perpendicular to the parting plane (T) of the connecting edge (8.1) and the mating connecting edge (8.2), and that for the formation of of the form-fitting interlocking teeth (11), the first housing shell (6.1) from its connecting edge (8.1) has protruding teeth (11), the tooth beveled in the longitudinal direction of the connecting edge (8.1) tooth flanks in such a way that the teeth (11) are separated from the tooth base in the direction of the tooth head, and the second Housing shell (6.2) from its mating edge (8.2) has protruding counter teeth which are connected to the teeth in the longitudinal direction of the opposite connecting edge (8.2) (11) of the first housing shell (6.1) have correspondingly beveled opposing tooth flanks, in such a way that the opposing teeth from the base of the tooth towards the tooth head, and in a joined state of the first shell (6.1) and the second shell (6.2) the tooth flanks lie flush with the opposing tooth flanks.

9. Robot arm according to any one of claims 1 to 3, **characterized in that** the connecting edge (8.1) of the first housing shell (6.1) and the mating connecting edge (8.2) of the second housing shell (6.2) for the transmission of shear forces longitudinally to the connecting edge (8.1) and the mating edge (8.2), and of shear forces transversely to the connecting edge (8.1) and the mating connecting edge (8.2) corresponding to form-fitting interlocking teeth (11) and the zipper (7, 7a, 7b) is designed to absorb only tensile forces perpendicular to the parting plane (T) of the connecting edge (8.1) and the mating connecting edge (8.2).

10. Robot arm according to claim 9, **characterized in that** for the formation of the form-fitting interlocking teeth (11) the first housing shell (6.1) has protruding teeth (11) from its connecting edge (8.1), which have beveled tooth flanks in the longitudinal and transverse direction of the connecting edge (8.1), in such a way that the teeth (11) taper both from the tooth base towards the tooth head and in the transverse direction, and the second housing shell (6.2) from its mating connecting edge (8. 2) has protruding counter-teeth which have corresponding bevelled counter-tooth flanks in the longitudinal and transverse direction of the counter-connecting edge (8.2) to the teeth (11) of the first housing shell (6.1), in such a way that the counter-teeth taper both from the tooth base towards the tooth head and in the transverse direction, and in a joined state of the first housing shell (6.1) and the second housing shell (6.2) the tooth flanks lie flush with the opposing tooth flanks.

11. Robotic arm according to any one of claims 1 to 10, **characterized in that** the first housing shell (6.1) has on its outer shell wall a longitudinally extending receiving groove adjoining the connecting edge (8.1) along the connecting edge (8.1), which is designed to accommodate the zipper (7, 7a, 7b) at least substantially flush with the outer shell wall and/or the second housing shell (6.2) on its outer shell wall has a longitudinal extension along the connecting edge (8.1), which is designed to accommodate the zipper (7, 7a, 7b) at least substantially flush with the outer shell wall and/or the second housing shell (6.2) on its outer shell wall (8.2), which is designed to accommodate the zipper (7, 7a, 7b) at least essentially flush with the outer sheath wall.

12. Robot arm according to one of claims 1 to 11, **characterized in that** the zipper (7, 7a, 7b) has a locking device which is designed to lock a slider of the zipper (7, 7a, 7b) in its closed position.

13. Robot arm according to one of claims 1 to 12, **characterized in that** the zipper (7, 7a, 7b) has a sealing lip extending longitudinally over the length of the zipper (7, 7a, 7b), which is designed to cover gaps, openings and/or cracks in the closed zipper (7, 7a, 7b) in a dust-proof and/or splash-proof manner.

14. Robot arm according to one of claims 1 to 13, **characterized in that** the at least one first housing shell (6.1) and the at least one second housing shell (6.2) are each made of plastic.

## Revendications

1. Bras robotisé, ayant une pluralité d'articulations (5) et une pluralité de liaisons (4), chacune d'entre elles reliant deux articulations adjacentes (5) dans un arrangement fixe l'une par rapport à l'autre, dans laquelle au moins l'une des liaisons (4) a au moins une première coque de boîtier (6.1) et au moins une deuxième coque de boîtier (6.2), et la première coque de logement (6.1) est reliée positivement à la deuxième coque de logement (6.2) par des moyens de connexion pour former une Maillon creux (5), **caractérisé en ce que** les moyens de liaison comportent au moins une fermeture éclair (7, 7a, 7b).

2. Bras robotique selon la revendication 1, **caractérisé en ce que** la fermeture éclair (7) est une fermeture à glissière dentelée (7a), une fermeture à glissière édentée (7b) et/ou une paire de bandes de fermeture coulissantes.

3. Bras robotique selon la revendication 1 ou 2, **caractérisé en ce que** la fermeture à glissière (7, 7a, 7b) comporte une première bande (18.1), qui est fixée à la première coque de boîtier (6.1) et une seconde bande (18.2) qui est fixée à la seconde coque de boîtier (6.2) de telle sorte que la fermeture à glissière (7, 7a, 7b) à l'état fermé présente au moins une section d'espace (S) dans le plan de division (T) entre le premier logement coque (6.1) et la seconde coque de boîtier (6.2) .

4. Bras robotisé selon l'une quelconque des revendications 1 à 3, **caractérisé en ce que** la première coque de logement (6.1) contient un bord de liaison (8.1), le second arbre de logement (6.2) a un bord de liaison correspondant (8.2) qui repose sur le bord de liaison (8.1) de la première coque de logement (6.1) à l'état joint de la première coque de logement (6.1) et de la fermeture éclair (7, 7a, 7b) les forces de cisaillement longitudinalement à l'arête de liaison (8.1) et au bord de connexion d'accouplement (8.2), ainsi que les forces de cisaillement transversales à l'arête de liaison (8.1) et à l'arête de connexion d'accouplement (8.2), ainsi que les forces de traction perpendiculaires au plan de joint (T) de l'arête de liaison (8.1) et de l'arête de liaison d'accouplement (8.2).

5. Bras de robot selon l'une quelconque des revendications 1 à 3, **caractérisé en ce que** le bord de liaison (8.1) de la première coque de logement (6.1) et le bord de liaison d'accouplement (8.2) de la seconde coque de logement (6.2) sont utilisés pour transmettre des forces de cisaillement transversales au bord de liaison (8.1) et au bord de contre-liaison (8.2) correspondant, notamment au moyen d'une connexion à tenon (9a) ou d'une liaison à ressort rainuré (9b) et de la fermeture éclair (7, 7a, 7b), les forces de cisaillement longitudinalement à l'arête de liaison (8.1) et au bord de contre-connexion (8.2), ainsi que les forces de traction perpendiculaires au plan de joint (T) de l'arête de liaison (8.1) et de l'arête de liaison d'accouplement (8.2).

6. Bras robotique selon la revendication 5, **caractérisé en ce que** le bord de liaison (8.1) de la première coque de boîtier (6.1) et le bord de liaison (8.2) de la seconde coque de logement (6.2) pour la transmission transversale des forces de cisaillement au bord de liaison (8.1) et au bord de liaison de liaison (8.2) sont décalés en conséquence par le bord de liaison (8.1) de la première coque de boîtier (6.1) et/ou le bord de liaison (8.2) des deux (6.2) présente un nervure (10) à laquelle l'autre coquille (6.1, 6.2) affleure.

7. Bras robotisé selon l'une des revendications 1 à 3, **caractérisé en ce que** la première coque de boîtier (6.1) et la seconde coque de boîtier (6.2) pour la transmission longitudinale des forces de cisaillement au bord de liaison (8.1) et au bord de liaison d'accouplement (8.2), et des forces de cisaillement transversalement au bord de liaison (8.1) et au bord de liaison d'accouplement (8.2) en pondérant avec ajustement de forme, des nervures d'emboîtement, de raidissement (12) et la fermeture éclair (7, 7a, 7b) est formée, seules des forces de traction perpendiculaires au plan de joint (T) du bord de liaison (8.1) et du bord de liaison d'accouplement (8.2) sont appliquées.

8. Bras de robot selon l'une quelconque des revendications 1 à 3, **caractérisé en ce que** le bord de liaison (8.1) de la première coque de logement (6.1) et le bord de liaison (8.2) de la seconde coque de logement (6.2) pour la transmission des forces de cisaillement sont formés longitudinalement au bord de liaison (8.1) et au bord de liaison correspondant (8.2) correspondant aux dents d'emboîtement ajustées (11) et à la fermeture éclair (7, 7a, 7b), les deux forces de cisaillement transversales à l'arête de liaison (8.1) et au contre-bord de liaison (8.2), ainsi que les forces de traction perpendiculaires au plan de joint (T) de l'arête de liaison (8.1) et de l'arête de liaison d'accouplement (8.2), et que pour la formation des dents d'emboîtement ajustées (11), la première coque de logement (6.1) à partir de son bord de liaison (8.1) a des dents saillantes (11), la dent biseautée dans le sens longitudinal du bord de liaison (8.1) flanques de la dent de telle sorte que les dents (11) sont séparées de la base de la dent dans la direction de la tête de dent, et la seconde coque de boîtier (6.2) à partir de son bord d'accouplement (8.2) a des contre-dents saillantes qui sont reliées aux dents dans le sens longitudinal du bord de liaison opposé (8.2) (11) de la première coque de boîtier (6.1) ont en conséquence Flancs de dents opposés biseautés, de telle sorte que les dents opposées de la base de la dent vers la tête de la dent, et dans un état joint de la première coquille (6.1) et de la seconde coquille (6.2), les flancs de la dent affleurent les flancs opposés des dents.

9. Bras de robot selon l'une quelconque des revendications 1 à 3, **caractérisé en ce que** le bord de liaison (8.1) de la première coquille de boîtier (6.1) et le bord de liaison d'accouplement (8.2) de la seconde coquille de boîtier (6.2) pour la transmission longitudinale des forces de cisaillement au bord de liaison (8.1) et au bord de contact (8.2), et des forces de cisaillement transversalement au bord de liaison (8.1) et au bord de liaison d'accouplement (8.2) correspondant à des dents d'emboîtement ajustées (11) et la fermeture éclair (7, 7a, 7b) est conçue pour absorber uniquement les forces de traction perpendiculaires au plan de séparation (T) du bord de liaison (8.1) et du bord de liaison d'accouplement (8.2).

10. Bras de robot selon la revendication 9, **caractérisé en ce que**, pour la formation des dents d'emboîtement ajustées (11), la première coquille de logement (6.1) présente des dents saillantes (11) de son bord de liaison (8.1), qui ont des flancs de dents biseautés dans le sens longitudinal et transversal du bord de liaison (8.1), de telle sorte que les dents (11) se rétrécissent à la fois de la base de la dent vers la tête de la dent et dans le sens transversal, et la seconde coque de logement (6.2) à partir de son bord de liaison d'accouplement (8.2) a des contre-dents saillantes qui ont des flancs de contre-dents biseautés correspondants dans la direction longitudinale et transversale du bord de contre-connexion (8.2) aux dents (11) de la première coquille de logement (6.1), de telle sorte que les contre-dents se rétrécissent à la fois de la base de la dent vers la tête de la dent et dans le sens transversal, et dans un état joint de la première coque de logement (6.1) et de la seconde coque de logement (6.2), les flancs des dents affleurent les flancs des dents opposées.

11. Bras robotique selon l'une quelconque des revendications 1 à 10, **caractérisé en ce que** la première coque de logement (6.1) présente sur sa paroi extérieure une rainure de réception s'étendant longitudinalement et attenante au bord de liaison (8.1) le long du bord de liaison (8.1), qui est conçue pour accueillir la fermeture éclair (7, 7a, 7b) au moins sensiblement au ras de la paroi de la coque extérieure et/ou que la seconde coque de logement (6.2) sur sa paroi extérieure a une extension longitudinale le long du bord de liaison (8.1), qui est conçu pour accueillir la fermeture éclair (7, 7a, 7b) au moins sensiblement au ras de la paroi extérieure de la coque et/ou de la seconde coque de logement (6.2) sur sa paroi extérieure (8.2), qui est conçue pour accueillir la fermeture éclair (7, 7a, 7b) au moins essentiellement au ras de la paroi extérieure de la gaine.

12. Bras robotisé selon l'une des revendications 1 à 11, **caractérisé en ce que** la fermeture éclair (7, 7a, 7b) est dotée d'un dispositif de verrouillage destiné à verrouiller un curseur de la fermeture éclair (7, 7a, 7b) en position fermée.

13. Bras de robot selon l'une des revendications 1 à 12, **caractérisé en ce que** la fermeture éclair (7, 7a, 7b) est dotée d'une lèvre d'étanchéité s'étendant longitudinalement sur toute la longueur de la fermeture éclair (7, 7a, 7b), qui est destinée à couvrir les interstices, ouvertures et/ou fissures de la fermeture à glissière fermée (7, 7a, 7b) de manière étanche à la poussière et/ou aux éclaboussures.

14. Bras de robot selon l'une des revendications 1 à 13, **caractérisé en ce que** la ou les premières coques de logement (6.1) et la ou les secondes coques de logement (6.2) sont chacune en plastique.
